# EUROPEAN PATENT SPECIFICATION

(11) **EP 4 313 760 B1**
(45) Date of publication and mention of the grant of the patent: **02.04.2025**
(21) Application number: 22719390.1
(22) Date of filing: 18.03.2022
(51) Int. Cl.: B64C 27/00, B64C 27/04, B64C 27/26, B64C 31/032

(54) **HELICOPTER FLIGHT SUPPORT**
HUBSCHRAUBERFLUGSTÜTZE
SUPPORT DE VOL D'HÉLICOPTÈRE

(30) Priority: 24.03.2021 US 202163165541 P; 01.03.2022 US 202217683877
(43) Date of publication of application: 07.02.2024
(73) Proprietor: Lolatchy, Schain, Rockville, MD 20850 (US)
(72) Inventor: Lolatchy, Schain, Rockville, MD 20850 (US)
(74) Representative: IP Maison
(86) International application number: PCT/US2022/020866
(87) International publication number: WO 2022/203948

(56) References cited:
- US-A- 3 599 904
- US-A- 5 474 257
- US-A- 5 884 863
- US-A1- 2017 283 035

## Description

### Cross-reference to related applications

This application claims priority to U.S. Patent Application Serial No. 17/683,877, filed March 1, 2022 and U.S. Provisional Application Serial No. 63/165,541, filed March 24, 2021.

### Field of the invention

The present invention discloses a helicopter flight support for allowing a helicopter to safely land in the event of rotor failure.

### Background

Helicopters typically fly at much lower altitudes than airplanes during routine use. As a result, any failure of the rotor can quickly land in a crash landing due to the reduced height. Most attempts at safety or escape systems have focused on deploying a parachute from the top of the helicopter or ejecting the pilot/passengers in a capsule or ejection seat. However, both of these escape systems do not provide any control over the descent and rely on parachutes to deploy which can require hundreds of feet to successfully deploy and slow objects as large as a helicopter. Therefore, a need exists for a helicopter flight support that can be safely deployed in the case of rotor failure that prolongs the descent, thus slowing the helicopter, while allowing some control over the descent. Document US5474257A describes a deployable wing, comprising: - a double membrane fabric sail having an upper section disposed above and joined to a lower section, said sail having a leading edge with a front point, a trailing edge, and wing tips, - an internal structure disposed between said upper section and said lower section, said internal structure having, i. two leading edge spars, each of said leading edge spars having a first end and a second end, said first ends of said leading edge spars pivotally connected together at approximately said front point, ii. a keel spar connected to and disposed between said leading edge spars at said front point and extending rearward toward said trailing edge, and iii. at least two cross spars pivotally attached to said leading edge spars and to a sliding mechanism which transverses along said keel spar.

### Summary

To solve the problems mentioned above, the claimed invention proposes a helicopter flight support according to claim 1. Optional features are mentioned in the dependent claims 2-16. Disclosed herein is a helicopter flight support for use in case of emergencies.

The helicopter flight support comprises a motor which causes a threaded shaft to turn which is coupled to an underside of the helicopter. This causes outer supports and inner supports to be deployed until they reach a wing-like configuration. The interior of the wing comprises a plurality of support cables for tensioning the wing. The helicopter flight support further comprises upper and lower support cables mounted to the tips of the wing to provide horizontal stability.

### Brief description of the drawings

FIG. 1 depicts a perspective view of the helicopter flight support in accordance with an embodiment of the invention.
FIG. 2 depicts a perspective view of the helicopter flight support with the cover removed.
FIG. 3 depicts a bottom view of the helicopter flight support in the undeployed configuration.
FIG. 4 depicts a side view of the helicopter flight support showing the coupling between the motor and the threaded shaft.
FIG. 5 depicts a perspective view of the deployment support.
FIG. 6 depicts a side view of the rear section of the helicopter flight support.
FIG. 7 depicts a bottom view of the helicopter flight support partially deployed.
FIG. 8 depicts a bottom view of the helicopter flight support further deployed.
FIG. 9 depicts a bottom view of the helicopter flight support fully deployed.
FIG. 10 depicts a front perspective view of the helicopter flight support fully deployed.
FIG. 11 depicts an enhanced view of a pivot joint showing the coupling between an outer support and an inner support.
FIG. 12 depicts an enhanced view of a pivot joint showing the coupling between an outer support having a cover and an inner support.
FIGS. 13 & 14 depict perspective views of ball bearing supports which allow the threaded shaft to freely rotate.

### Detailed description

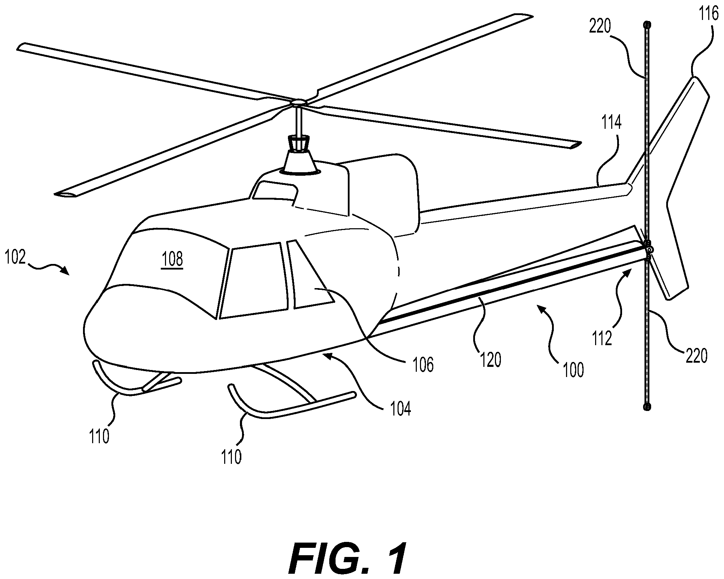

FIG. 1 depicts a perspective view of helicopter flight support 100 mounted to an underside of helicopter 102. A first end 104 of helicopter flight support 100 is coupled to the underside of the passenger compartment 106 or cockpit 108 between landing skids 110. The exact coupling position is determined by the requirements of the helicopter 102 (e.g., geometry, weight). A second end 112 of the helicopter flight support 100 is coupled to an underside of tail 114 or rudder 116. The exact coupling position of the second end 112 is also determined by the requirements of helicopter 102 or the shape/design.

The helicopter flight support 100 is shown in the stowed position in FIG. 1 and the majority of its components are shielded by cover 120 which forms a shell surrounding the majority of helicopter flight support 100 in the closed position. As will be described later, cover 120 is preferably formed from two C-shaped cross-sectional pieces that mate to form a cylinder or elliptic cylinder surrounding helicopter flight support 100. A first half of cover 120 preferably mates with the second half of cover 120 via a lip, such that the two halves overlap along their length when closed. Cover 120 protects many mechanical parts of helicopter flight support 100 from inclement weather and helps to hold helicopter flight support 100 in the stowed state. Cover 120 also provides lift as in an airplane. The cross-section of cover 120 decreases from the front of helicopter flight support 100 to the rear of helicopter flight support 100.

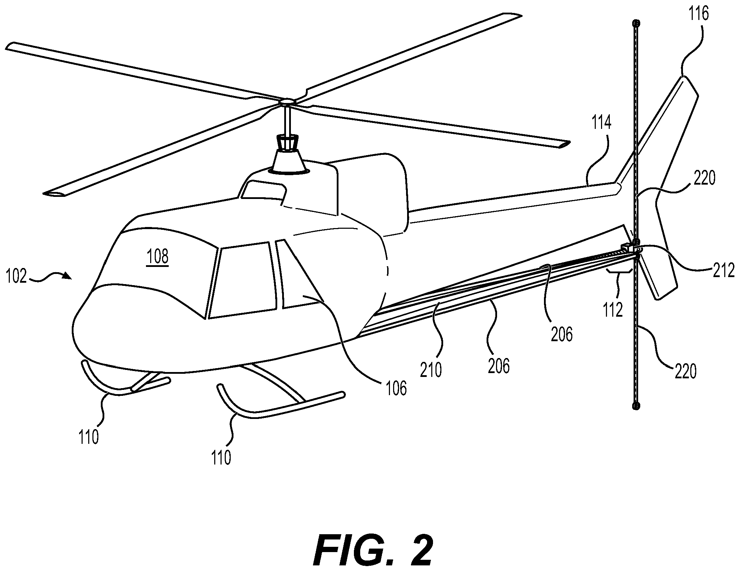

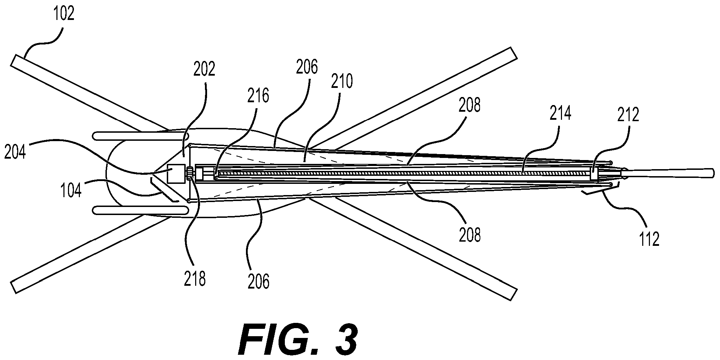

FIG. 2 depicts a perspective view of helicopter flight support 100 with the cover 120 removed and FIG. 3 depicts a bottom view of helicopter flight support 100. Helicopter flight support 100 generally comprises front mounting bracket 202, motor 204, outer supports 206, inner supports 208, fabric 210, rear mounting bracket 212, threaded shaft 214, deployment support 216, coupling gears 218, and stability supports 220. Other features of helicopter flight support 100 not visible in FIGS. 1-3 will be described in the subsequent drawings.

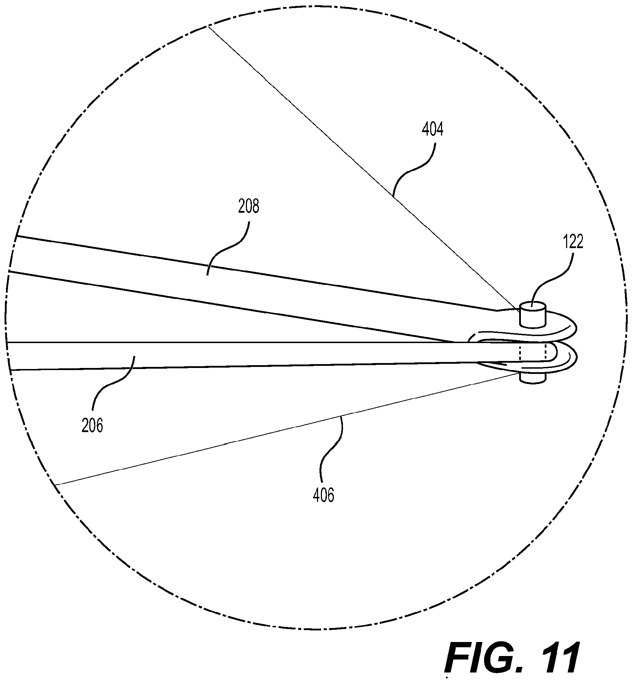

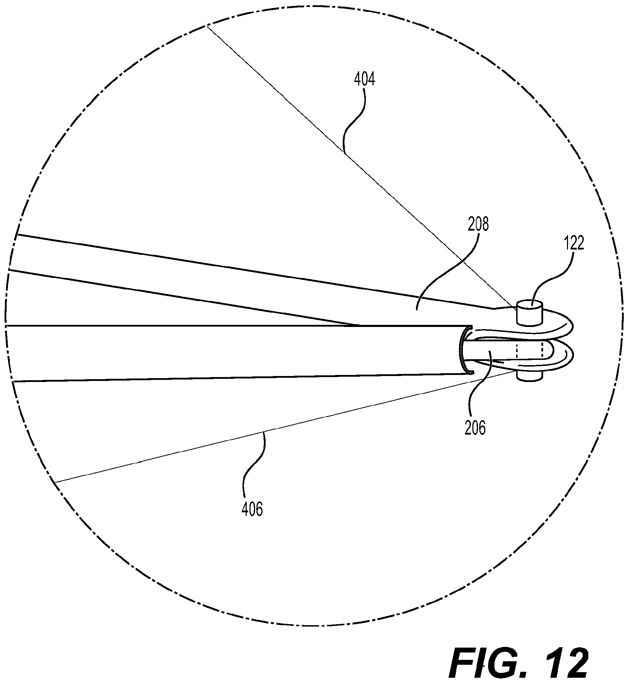

First end of outer supports 206 are pivotally coupled to front mounting bracket 202 and second ends of outer supports 206 are pivotally coupled to first ends of inner supports 208. Second ends of inner supports 206 are coupled to wing bracket 414 of deployment support 216. An example pivot joint showing the coupling of an outer support 206 to an inner support 208 is depicted in FIGS. 11 and 12. In this embodiment, a pin 122 is inserted between the supports to allow pivoting. It should be obvious to one of ordinary skill in the art that any type of joint allowing pivoting can be used. FIG. 12 further depicts cover 120 mounted to outer supports 206 to provide lift as previously described.

The fabric 210 is coupled to outer supports 206 and inner supports 208 to form a wing structure when helicopter flight support 100 is fully deployed as will be shown later. Preferably, the fabric 210 is arranged in two layers with an upper layer and a lower layer. Outer supports 206 and inner supports 208 are preferably constructed from a durable but lightweight material such as aluminum or carbon fiber.

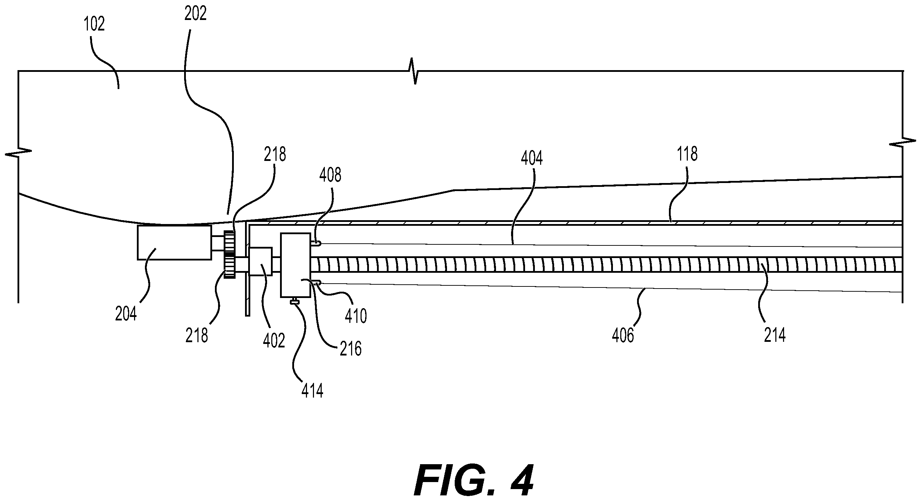

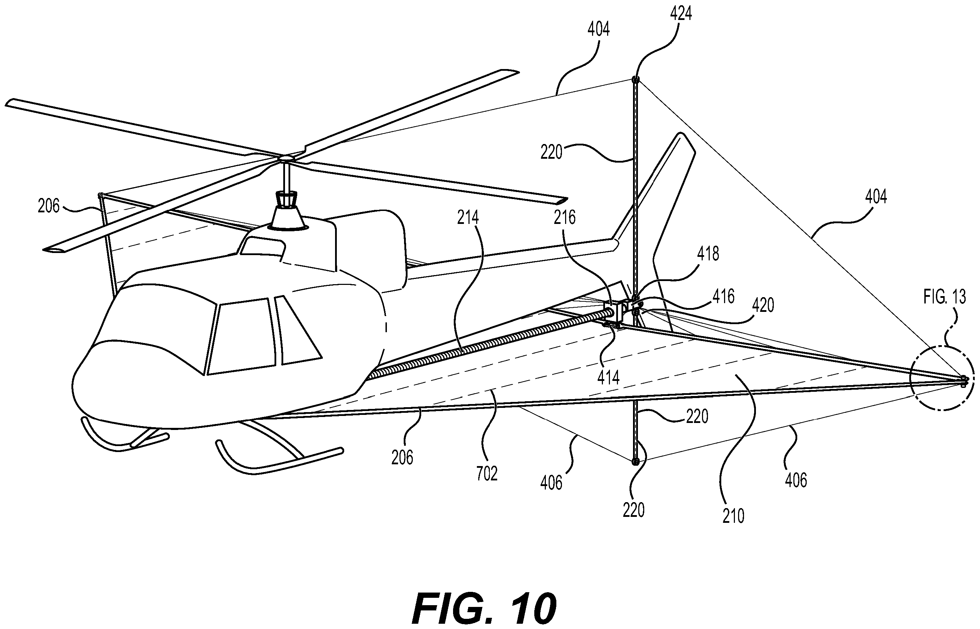

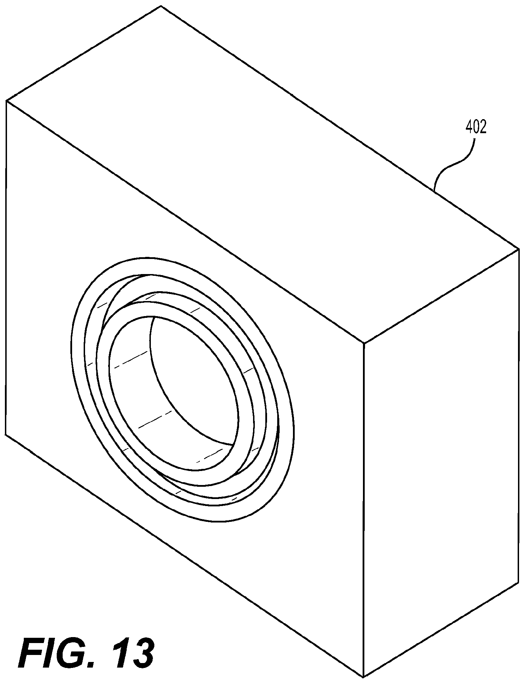

FIG. 4 depicts a side view showing the coupling between motor 204 and threaded shaft 214. Motor 204 and sheath 118 are coupled to an underside of helicopter 102 and/or front mounting bracket 202. The motor 204 receives power from an internal battery or directly from the power system of helicopter 102. Motor 204 turns a first coupling gear 218 whose teeth mate with a second coupling gear coupled to an end of threaded shaft 214. A first end of threaded shaft 214 comprises no threads so that the threaded shaft 214 can freely rotate within ball bearing support 402 which is mounted to sheath 118 (FIG. 13). In the stowed state of helicopter flight support 100, deployment support 216 resides at the first end 104. Two upper support cables 404 are coupled to the deployment support 216 at a first attachment point 408 and two lower support cables 406 are coupled to the deployment support 216 at a second attachment point 410. The other ends of upper support cables 404 and lower support cables 406 are coupled to edges of the wing of helicopter flight support 100 (FIG. 10).

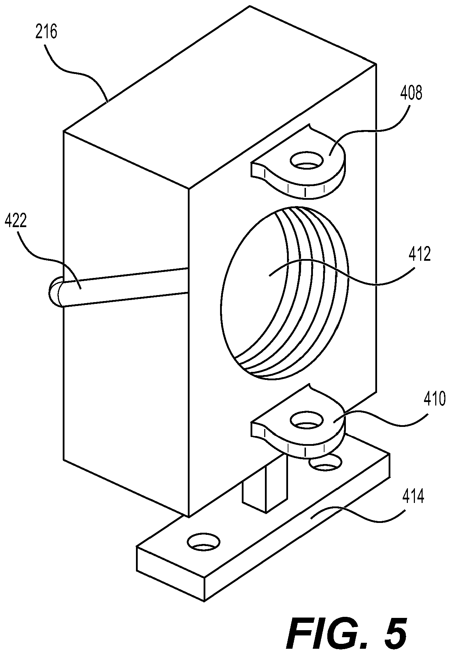

A perspective view of a preferred embodiment of deployment support 216 is depicted in FIG. 5. Deployment support 216 is preferably rectangular or square in shape and comprises threaded opening 412 which mate with the threads on threaded shaft 214. As will be discussed later, rotation of threaded shaft 214 by motor 204 causes deployment support 216 to move along threaded shaft 214. A wing bracket 414 extends from a bottom of deployment support 216 below sheath 118 and preferably has a T-shape. Each side of the wing bracket 414 is pivotally coupled to a single outer support 206 with a coupling similar to that shown in FIG. 11.

The left and right sides of deployment support 216 may comprise one or more linear protrusions 422 which mate with a corresponding groove in sheath 118. This helps to ensure that deployment support 216 does not rotate and only moves linearly along the length of threaded shaft 214.

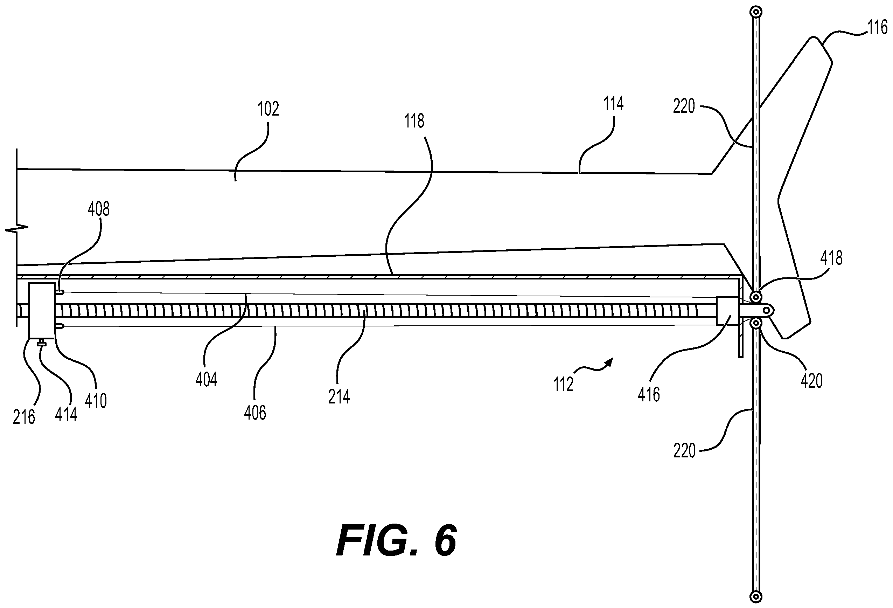

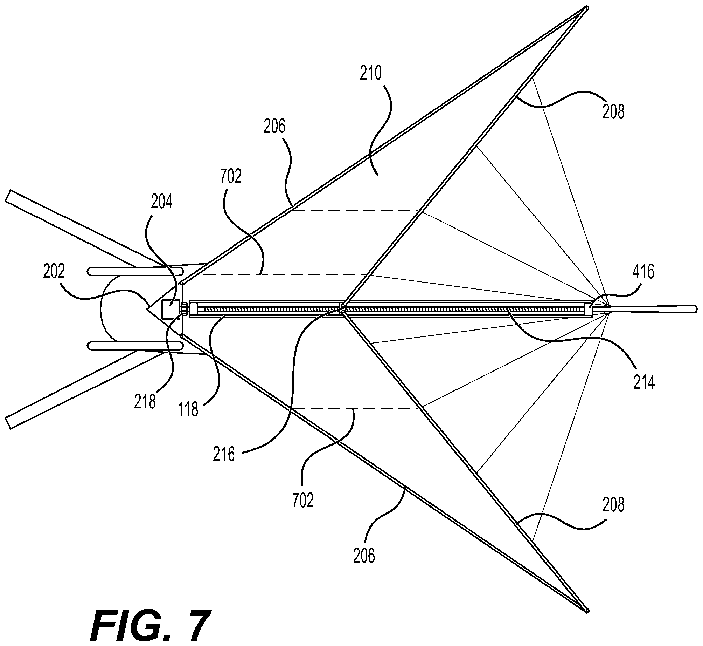

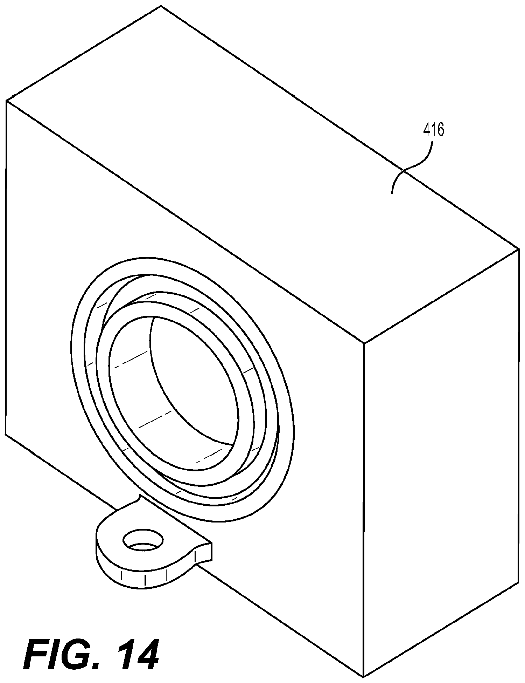

FIG. 6 depicts a side view showing the coupling between second end 112 and helicopter 102. A rear of sheath 118 and/or rear ball bearing support 416 is coupled to tail 114 or rudder 116. The exact coupling positions are dictated by the geometry of helicopter 102. The end of threaded shaft 214 comprises no threads so it can rotate freely within rear ball bearing support 416 (FIG. 14). The threaded shaft 214 can freely rotate within the ball bearing opening while the body of ball bearing support 416 is fixed to helicopter 102. Further, as depicted in FIG. 7, the ends of all support cables 702 are coupled to ball bearing support 416.

Upper support cable 406 is routed along the length of sheath 118 and exits the rear over upper pulley(s) 418 into a first stability support 220. Lower support cable 406 is routed along the length of sheath 118 and exits the rear over lower pulley(s) 420 into a second stability support 220. Stability supports 220 are rigid tubes that are maintained in a vertical position through a coupling to helicopter 102. Both upper support cables 404 and lower support cables 406 are maintained under tension during deployment of helicopter flight support 100.

The deployment of helicopter flight support 100 will be described with respect to FIGS. 7-9. Upper support cables 404 and lower support cables 406 are not shown in these views for clarity. Upon detection of an emergency or by a pilot of helicopter 102, motor 204 begins turning threaded shaft 214, causing deployment support 216 to move along threaded shaft 214. As shown in FIG. 7, the pivoting of inner supports 208 about deployment support 216 causes outer supports 206 to pivot outward about front mounting bracket 202.

Another feature of helicopter flight support 100 is depicted in FIGS. 7-9. Preferably, helicopter flight support 100 comprises an upper layer of fabric 210 and a lower layer of fabric 210. Fabric 210 is preferably a nylon parachute fabric such as Terlyene. A plurality of support cables 702 are sandwiched between the two layers of fabric. First ends of each support cable 702 are coupled to outer support 206 and exit through openings in inner support 208. The second ends of all support cables 702 are coupled to ball bearing support 416 at an attachment point (FIG. 14). The upper and lower layers of fabric are preferably sewed together at points surrounding support cables 702 to form internal channels for support cables 702. Support cables 702 help to maintain the rigidity of helicopter flight support 100 when deployed and help to cause fabric 210 to collapse when helicopter flight support 100 is stowed. It should be obvious to one of ordinary skill in the art that the number and location of support cables 702 can be varied in accordance with the requirements of helicopter flight support 100.

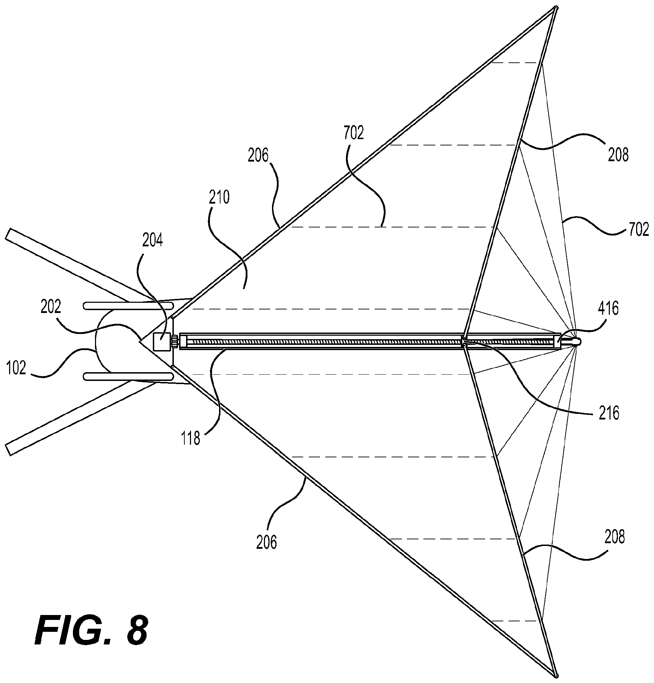

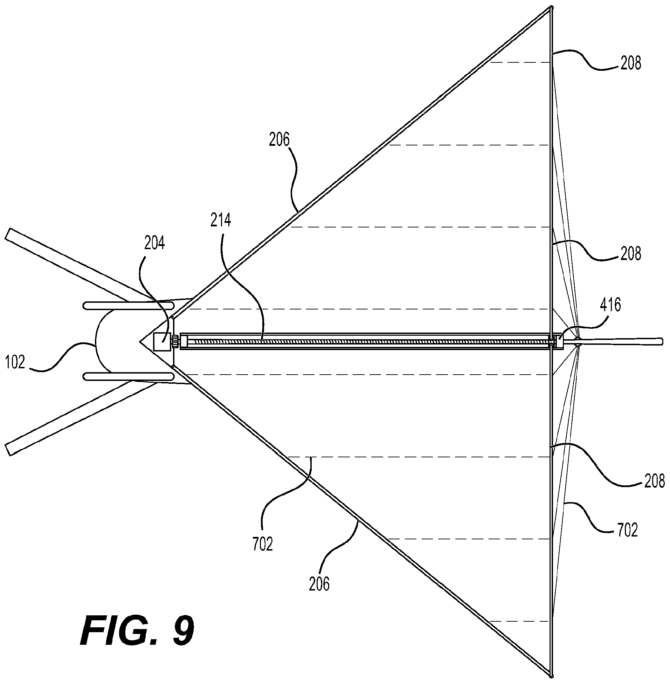

FIG. 8 depicts helicopter flight support 100 almost fully deployed. The fabric 210 is almost fully tensioned and begins to form a wing shape. FIG. 9 depicts helicopter flight support 100 fully deployed. At this point, the inner supports 208 are in line with each other and the helicopter flight support 100 has a triangular/wing shape. The support cables 702 are all parallel at this point and are perpendicular to inner supports 208.

FIG. 10 depicts helicopter flight support 100 in its final deployed state. At this point, deployment support 216 has moved to the rear of threaded shaft 214 and motor 204 stops turning, locking helicopter flight support in this state. The fabric 210 is fully tensioned into the described wing shape. All support cables 702 are parallel at this point and help provide rigidity to helicopter flight support 100. The complete routing of upper support cables 404 and lower support cables 406 can be seen in this view. First ends of upper support cables 404 are coupled to deployment support 216, are routed over upper pulley(s) 418, through stability support 220, over second upper pulley(s) 424, and are coupled to the connection points between outer supports 206 and inner supports 208 (i.e., to edges of the wing). Similarly, first ends of lower support cables 406 are coupled to deployment support 216, are routed over lower pulley(s) 418, through stability support 220, over second lower pulley(s) 426, and are coupled to the connection points between outer supports 206 and inner supports 208 (i.e., to edges of the wing). Since upper support cables 404 and lower support cables 406 are under tension, they help to provide further stability to helicopter flight support 100 in the deployed state.

While helicopter flight support 100 is deployed, it provides a large amount of surface area under helicopter 102 as shown in FIG. 11. Because there is separation between the top of fabric 210 and the underside of helicopter 102, helicopter flight support 100 acts similar to a glider and allows helicopter 102 to glide and have a longer and slower descent. The pilot can also use rudder 116 or the rotor to have some control over the descent of helicopter 102.

Because helicopter flight support 100 is primarily configured for use during emergency situations, it may not survive a landing in working condition. However, if helicopter flight support 100 remains intact after landing, it is possible to reuse helicopter flight support 100. All that is required is for deployment support 216 to be moved back to its initial position to cause reversal of the process depicted in FIGS. 7-9. After helicopter flight support 100 is collapsed, the fabric 210 can be gathered and stowed again within cover 120 by a technician or pilot.

## Claims

1. A helicopter flight support (100) for a helicopter (102) comprising:
a first outer support (206) having a first end configured to be pivotally coupled to a bottom of the helicopter near the front of the helicopter;
a second outer support (206) having a second end configured to be pivotally coupled to the bottom of the helicopter opposite the first outer support;
a rotatable shaft (214) having a threaded portion configured to be coupled to the helicopter between the first outer support and the second outer support;
a motor (204) for rotating the threaded shaft;
a deployment support (216) having a threaded opening configured to mate with the threaded portion of the rotatable shaft;
a first inner support (208) having a third end pivotally coupled to a fourth end of the first outer support at a first pivot joint;
a second inner support (208) having a fifth end pivotally coupled to a sixth end of the second outer support at a second pivot joint,
wherein a seventh end of the first inner support is pivotally coupled to the deployment support, and
wherein an eighth end of the second inner support is pivotally coupled to the deployment support; and
a first layer of fabric (210) and a second layer of fabric (210) having a wing shape coupled to the first outer support, the second outer support, the first inner support, and the second inner support;
wherein rotation of the rotatable shaft in a first direction by the motor causes movement of the deployment support along the threaded section towards, in use, a rear of the helicopter to cause deployment of the helicopter flight support.

2. The helicopter flight support according to claim 1, further comprising:
a plurality of support cables (702) having first ends coupled to an inner edge of the first outer support and second ends coupled to an attachment point mounted to a rear of the helicopter in a vicinity of the rotatable shaft,
wherein the plurality of support cables exit openings in the first inner support before joining with the attachment point.

3. The helicopter flight support of claim 2, wherein the plurality of support cables are sandwiched between the first layer of fabric and the second layer of fabric.

4. The helicopter flight support of claim 1, further comprising:
a first cover (120) having a semioval shape coupled to an outer edge of the first outer support; and
a second cover (120) having a semioval shape coupled to an outer edge of the second outer support,
wherein the first cover has a first edge that mates with a second edge of the second cover when the helicopter flight support is in an undeployed configuration to form an oval-shaped or circular cover for the helicopter flight support.

5. The helicopter flight support according to claim 1, further comprising:
a sheath (118) having an open bottom covering at least the threaded portion of the rotatable shaft and the deployment support.

6. The helicopter flight support according to claim 1, further comprising:
a first ball bearing support (402) configured to be mounted to an underside of the helicopter at a first end; and
a second ball bearing support (416) configured to be mounted to the helicopter near a tail or rudder of the helicopter,
wherein a first end of the rotatable shaft freely rotates within the first ball bearing support, and
wherein a second end of the rotatable shaft freely rotates within the second ball bearing support.

7. The helicopter flight support according to claim 1, further comprising:
an upper stability support (220) having a cylindrical shape configured to be coupled to the rear of the helicopter in a vertical configuration;
a lower stability support (220) having a cylindrical shape configured to be coupled to the rear of the helicopter in a vertical configuration;
a first set of upper support cables (404); and
a first set of lower support cables (406),
wherein first ends of the upper support cables are coupled to the deployment support and second ends of the upper support cables are coupled to the first pivot joint and the second pivot joint, and
wherein the upper support cables are routed through the upper stability support,
wherein first ends of the lower support cables are coupled to the deployment support and second ends of the lower support cables are coupled to the first pivot joint and the second pivot joint, and
wherein the lower support cables are routed through the lower stability support.

8. The helicopter flight support according to claim 1,
wherein the first fabric is a nylon parachute fabric, and
wherein the second fabric is a nylon parachute fabric.

9. The helicopter flight support according to claim 2·, wherein the openings are equally spaced.

10. The helicopter flight support according to claim 9, wherein a portion of the plurality of support cables sandwiched between the first fabric and the second fabric are substantially parallel when the helicopter flight support is in a deployed configuration.

11. The helicopter flight support according to claim 9,
wherein the first fabric and the second fabric are joined to each other in the vicinity of each cable of the plurality of support cables to form a channel for each cable.

12. The helicopter flight support according to claim 1, wherein the first outer support and the second outer support are formed from aluminum or carbon fiber.

13. The helicopter flight support according to claim 1, wherein the first outer support and the second outer support have a same length.

14. The helicopter flight support according to claim 13, wherein the first inner support and the second inner support have a same length.

15. The helicopter flight support according to claim 14, wherein a length of the first outer support is greater than a length of the first inner support.

16. The helicopter flight support according to claim 1, wherein the helicopter flight support forms a wing having a substantially triangular configuration after deployment.

## Patentansprüche

1. Hubschrauberflugstütze (100) für einen Hubschrauber (102), aufweisend:
eine erste äußere Stütze (206), die ein erstes Ende aufweist, das ausgelegt ist, nahe der Vorderseite des Hubschraubers mit einer Unterseite des Hubschraubers schwenkbar verbunden zu werden;
eine zweite äußere Stütze (206), die ein zweites Ende aufweist, das ausgelegt ist, mit der Unterseite des Hubschraubers an einer der ersten äußeren Stütze entgegengesetzten Seite schwenkbar verbunden zu werden;
eine drehbare Welle (214) mit einem Gewindeabschnitt, die ausgelegt ist, mit dem Hubschrauber zwischen der ersten äußeren Stütze und der zweiten äußeren Stütze verbunden zu werden;
einen Motor (204) zum Drehen der Welle mit dem Gewinde;
eine Entfaltungsstütze (216) mit einer Gewindeöffnung, die ausgelegt ist, mit dem Gewindeabschnitt der drehbaren Welle verkuppelt zu werden;
eine erste innere Stütze (208), die ein drittes Ende aufweist, das über ein erstes Drehgelenk mit einem vierten Ende der ersten äußeren Stütze schwenkbar verbunden ist;
eine zweite innere Stütze (208), die ein fünftes Ende aufweist, das über ein zweites Drehgelenk mit einem sechsten Ende der zweiten äußeren Stütze schwenkbar verbunden ist,
wobei ein siebtes Ende der ersten inneren Stütze mit der Entfaltungsstütze schwenkbar verbunden ist und
wobei ein achtes Ende der zweiten inneren Stütze mit der Entfaltungsstütze schwenkbar verbunden ist; und
eine erste Lage aus Gewebe (210) und eine zweite Lage aus Gewebe (210) in Flügelform, die mit der ersten äußeren Stütze, der zweiten äußeren Stütze, der ersten inneren Stütze und der zweiten inneren Stütze verbunden sind;
wobei eine Drehung der drehbaren Welle durch den Motor in eine erste Richtung eine Bewegung der Entfaltungsstütze entlang des Gewindeabschnitts im Betrieb zu einer Hinterseite des Hubschraubers bewirkt, um eine Entfaltung der Hubschrauberflugstütze zu bewirken.

2. Hubschrauberflugstütze gemäß Anspruch 1, ferner aufweisend:
eine Mehrzahl von Stützseilen (702), die mit ersten Enden mit einer Innenkante der ersten äußeren Stütze und mit zweiten Enden mit einem Befestigungspunkt verbunden sind, der nahe der drehbaren Welle an einer Hinterseite des Hubschraubers angebracht ist,
wobei die Mehrzahl von Stützseilen aus Öffnungen in der ersten inneren Stütze austritt, bevor sie zu dem Befestigungspunkt gelangen.

3. Hubschrauberflugstütze gemäß Anspruch 2, wobei die Mehrzahl von Stützseilen zwischen der ersten Gewebelage und der zweiten Gewebelage angeordnet sind.

4. Hubschrauberflugstütze gemäß Anspruch 1, ferner aufweisend:
eine erste Bedeckung (120) von halbovaler Form, die mit einer Außenkante der ersten äußeren Stütze verbunden ist; und
eine zweite Bedeckung (120) von halbovaler Form, die mit einer Außenkante der zweiten äußeren Stütze verbunden ist,
wobei die erste Bedeckung eine erste Kante aufweist, welche sich mit einer zweiten Kante der zweiten Bedeckung vereint, wenn die Hubschrauberflugstütze in einem nicht entfalteten Zustand ist, um eine Bedeckung von ovaler Form oder von Kreisform für die Hubschrauberflugstütze zu bilden.

5. Hubschrauberflugstütze gemäß Anspruch 1, ferner aufweisend:
einen Mantel (118) mit offener Unterseite, der zumindest den Gewindeabschnitt der drehbaren Welle und die Entfaltungsstütze bedeckt.

6. Hubschrauberflugstütze gemäß Anspruch 1, ferner aufweisend:
eine erste Kugellagerhalterung (402), die ausgelegt ist, an einem ersten Ende an einer Unterseite des Hubschraubers befestigt zu werden; und
eine zweite Kugellagerhalterung (416), die ausgelegt ist, nahe an einem Heck oder einem Ruder des Hubschraubers befestigt zu werden,
wobei sich ein erstes Ende der drehbaren Welle in der ersten Kugellagerhalterung frei dreht und
wobei sich ein zweites Ende der drehbaren Welle in der zweiten Kugellagerhalterung frei dreht.

7. Hubschrauberflugstütze gemäß Anspruch 1, ferner aufweisend:
eine obere Stabilitätsstütze (220) in Zylinderform, die ausgelegt ist, in einer vertikalen Anordnung mit der Hinterseite des Hubschraubers verbunden zu werden;
eine untere Stabilitätsstütze (220) in Zylinderform, die ausgelegt ist, in einer vertikalen Anordnung mit der Hinterseite des Hubschraubers verbunden zu werden;
eine erste Gruppe von oberen Stützseilen (404); und
eine erste Gruppe von unteren Stützseilen (406),
wobei erste Enden der oberen Stützseile mit der Entfaltungsstütze verbunden sind und zweite Enden der oberen Stützseile mit dem ersten Drehgelenk und dem zweiten Drehgelenk verbunden sind und
wobei die oberen Stützseile durch die obere Stabilitätsstütze geführt sind,
wobei erste Enden der unteren Stützseile mit der Entfaltungsstütze verbunden sind und zweite Enden der unteren Stützseile mit dem ersten Drehgelenk und dem zweiten Drehgelenk verbunden sind und
wobei die unteren Stützseile durch die untere Stabilitätsstütze geführt sind.

8. Hubschrauberflugstütze gemäß Anspruch 1,
wobei das erste Gewebe ein Nylon-Fallschirmstoff ist und
wobei das zweite Gewebe ein Nylon-Fallschirmstoff ist.

9. Hubschrauberflugstütze gemäß Anspruch 2, wobei die Öffnungen gleichmäßig beabstandet sind.

10. Hubschrauberflugstütze gemäß Anspruch 9, wobei ein Teil der Mehrzahl von Stützseilen, der zwischen dem ersten und dem zweiten Gewebe angeordnet ist, im Wesentlichen parallel verläuft, wenn die Hubschrauberflugstütze in einem entfalteten Zustand ist.

11. Hubschrauberflugstütze gemäß Anspruch 9,
wobei das erste Gewebe und das zweite Gewebe in der Nähe jedes Seils der Mehrzahl von Stützseilen verbunden sind, um für jedes Seil einen Kanal auszubilden.

12. Hubschrauberflugstütze gemäß Anspruch 1, wobei die erste äußere Stütze und die zweite äußere Stütze aus Aluminium oder Kohlefaser ausgebildet sind.

13. Hubschrauberflugstütze gemäß Anspruch 1, wobei die erste äußere Stütze und die zweite äußere Stütze die gleiche Länge aufweisen.

14. Hubschrauberflugstütze gemäß Anspruch 13, wobei die erste innere Stütze und die zweite innere Stütze die gleiche Länge aufweisen.

15. Hubschrauberflugstütze gemäß Anspruch 14, wobei eine Länge der ersten äußeren Stütze größer als eine Länge der ersten inneren Stütze ist.

16. Hubschrauberflugstütze gemäß Anspruch 1, wobei die Hubschrauberflugstütze nach dem Entfalten einen Flügel von im Wesentlichen dreieckiger Anordnung bildet.

## Revendications

1. Support de vol pour un hélicoptère, comprenant :
- un premier support extérieur ayant une première extrémité couplée de manière pivotante à un plancher de l'hélicoptère près de l'avant de l'hélicoptère ;
- un deuxième support extérieur ayant une deuxième extrémité couplée de manière pivotante au plancher de l'hélicoptère à l'opposé du premier support extérieur;
- un arbre rotatif ayant une partie filetée couplée à l'hélicoptère entre le premier support extérieur et le deuxième support extérieur;
- un moteur pour faire tourner l'arbre fileté ;
- un support de déploiement ayant une ouverture filetée configurée pour s'accoupler avec la partie filetée de l'arbre rotatif ;
- un premier support intérieur ayant une troisième extrémité couplée de manière pivotante à une quatrième extrémité du support extérieur au niveau d'une première articulation pivotante ;
- un deuxième support intérieur ayant une cinquième extrémité couplée de manière pivotante à une sixième extrémité du premier support extérieur au niveau d'une deuxième articulation à pivot,
- dans lequel une septième extrémité du premier support interne est couplée de manière pivotante au support de déploiement, et
- dans lequel une huitième extrémité du deuxième support interne est couplée de manière pivotante au support de déploiement ; et
- une première couche de tissu et une deuxième couche de tissu ayant une forme d'aile couplée au premier support extérieur, au second support extérieur, au premier support intérieur et au second support intérieur;
- dans lequel la rotation de l'arbre rotatif dans une première direction par le moteur provoque le mouvement du support de déploiement le long de la section filetée vers l'arrière de l'hélicoptère pour provoquer le déploiement du support de vol de l'hélicoptère.

2. Support de vol pour hélicoptère selon la revendication 1, comprenant en outre :
- une pluralité de câbles de support ayant des premières extrémités couplées à un bord intérieur du premier support extérieur et des deuxièmes extrémités couplées à un point de fixation monté à l'arrière de l'hélicoptère à proximité de l'arbre rotatif,
- dans lequel la pluralité de câbles de support passent au travers des ouvertures dans le premier support interne avant de se joindre au point de fixation.

3. Support de vol d'hélicoptère selon la revendication 2, dans lequel la pluralité de câbles de support sont agencés entre la première couche de tissu et la deuxième couche de tissu.

4. Support de vol pour hélicoptère selon la revendication 1, comprenant en outre:
- un premier habillage ayant une forme semi-ovale couplée à un bord extérieur du premier support extérieur ; et
- un deuxième habillage ayant une forme semi-ovale couplée à un bord extérieur du deuxième support extérieur,
- dans lequel le premier habillage a un premier bord qui est couplé avec un deuxième bord du second couvercle lorsque le support de vol d'hélicoptère est dans une configuration non-déployée pour former un habillage de forme ovale ou circulaire pour le support de vol d'hélicoptère.

5. Support de vol pour hélicoptère selon la revendication 1, comprenant en outre :
- une gaine ayant un fond ouvert recouvrant au moins la partie filetée de l'arbre rotatif et le support de déploiement.

6. Support de vol pour hélicoptère selon la revendication 1, comprenant en outre:
- un premier support de roulement à billes monté sur une face inférieure de l'hélicoptère à une première extrémité, ; et
- un deuxième support de roulement à billes monté sur l'hélicoptère près de la queue ou du gouvernail de l'hélicoptère,
- dans lequel une première extrémité de l'arbre rotatif tourne librement à l'intérieur du premier support de roulement à billes, et
- dans lequel une deuxième extrémité de l'arbre rotatif tourne librement dans le deuxième support de roulement à billes.

7. Support de vol pour hélicoptère selon la revendication 1, comprenant en outre :
- un support de stabilité supérieur ayant une forme cylindrique couplé à l'arrière de l'hélicoptère dans une configuration verticale ;
- un support de stabilité inférieur ayant une forme cylindrique couplé à l'arrière de l'hélicoptère dans une configuration verticale ;
- une pluralité de câbles de support supérieurs ; et
- une pluralité de câbles de support inférieurs,
- dans lequel les premières extrémités des câbles de support supérieurs sont couplées au support de déploiement et les deuxièmes extrémités des câbles de support supérieurs sont couplées à la première articulation à pivot et à la deuxième articulation à pivot, et
- dans lequel les câbles de support supérieurs sont acheminés à travers le support de stabilité supérieur,
- dans lequel les premières extrémités des câbles de support inférieurs sont couplées au support de déploiement et les secondes extrémités des câbles de support inférieurs sont couplées à la première articulation à pivot et à la deuxième articulation à pivot, et
- dans lequel les câbles de support inférieurs sont agencés à travers le support de stabilité inférieur.

8. Support de vol pour hélicoptère selon la revendication 1,
- dans lequel le premier tissu est un tissu de parachute en nylon, et
- dans lequel le deuxième tissu est un tissu de parachute en nylon.

9. Support de vol pour hélicoptère selon la revendication 1, comprenant en outre :
- une pluralité de câbles de support ayant des premières extrémités couplées à un bord intérieur du premier support extérieur et des deuxièmes extrémités couplées à un point de fixation monté à l'arrière de l'hélicoptère à proximité de l'arbre rotatif,
- dans lequel la pluralité de câbles de support passe au travers des ouvertures régulièrement espacées dans le premier support interne avant de se joindre au point de fixation.

10. Support de vol d'hélicoptère selon la revendication 9, dans lequel une partie de la pluralité de câbles de support agencés entre le premier tissu et le deuxième tissu sont dans une configuration déployée.

11. Support de vol pour hélicoptère selon la revendication 9, dans lequel le premier tissu et le deuxième tissu sont joints l'un à l'autre au voisinage de chaque câble de la pluralité de câbles de support pour former un conduit pour chaque câble.

12. Support de vol pour hélicoptère selon la revendication 1, dans lequel le premier support extérieur et le deuxième support extérieur sont formés de fibre d'aluminium ou de carbone.

13. Support de vol pour hélicoptère selon la revendication 1, dans lequel le premier support extérieur et le d'aluminium support extérieur ont une même longueur.

14. Support de vol pour hélicoptère selon la revendication 13, dans lequel le premier support intérieur et le d'aluminium support intérieur ont une même longueur.

15. Support de vol pour hélicoptère selon la revendication 14, dans lequel une longueur du premier support extérieur est supérieure à une longueur du premier support intérieur.

16. Support de vol pour hélicoptère selon la revendication 1, dans lequel le support de vol pour hélicoptère est agencé pour former une aile ayant une configuration sensiblement triangulaire après déploiement.
